Europäisches Patentamt

European Patent Office

Office européen des brevets

(19)

(11) Veröffentlichungsnummer: **0 269 895 B1**

(12) **EUROPÄISCHE PATENTSCHRIFT**

(45) Veröffentlichungstag der Patentschrift: 26.06.91

(21) Anmeldenummer: 87116220.2

(22) Anmeldetag: 04.11.87

(51) Int. Cl.⁵: **B01D 29/07**, B01D 35/30, B01D 27/06, B01D 27/08, F02M 37/22

(54) Flüssigkeitsfilter, insbesondere für Kraftstoffe.

(30) Priorität: 03.12.86 DE 3641348

(43) Veröffentlichungstag der Anmeldung:
08.06.88 Patentblatt 88/23

(45) Bekanntmachung des Hinweises auf die
Patenterteilung:
26.06.91 Patentblatt 91/26

(84) Benannte Vertragsstaaten:
DE ES FR GB IT

(56) Entgegenhaltungen:
DE-A- 2 524 450      DE-A- 2 547 857
DE-U- 8 533 631      FR-A- 2 598 936
GB-A- 909 891        GB-A- 2 031 296
US-A- 4 017 400

(73) Patentinhaber: ROBERT BOSCH GMBH
Postfach 50
W-7000 Stuttgart 1(DE)

(72) Erfinder: Bosch, Franz-Ulrich, Dipl.-Ing.
Eduard-Steinle-Strasse 36
W-7000 Stuttgart 75(DE)
Erfinder: Füssner, Paul, Dipl.-Ing.
Sommerhofenstrasse 167
W-7032 Sindelfingen(DE)
Erfinder: Haas, Wolfgang
Bebelstrasse 29/3
W-7000 Stuttgart 1(DE)
Erfinder: Hogh, Josef
Hainbuchenstrasse 23
W-7050 Waiblingen(DE)
Erfinder: Mootz, Friedrich, Ing. grad.
Gerokstrasse 10
W-7140 Ludwigsburg(DE)
Erfinder: Müller, Willi
Wiesenstrasse 38
W-7247 Sulz-Sigmarswangen(DE)
Erfinder: Scholz, Erich
Adenauerstrasse 34
W-7303 Neuhausen(DE)
Erfinder: Straubel, Max, Dr.
Ontariostrasse 30B
W-7000 Stuttgart 61(DE)

## Beschreibung

Stand der Technik

Die Erfindung geht aus von einem Flüssigkeitsfilter nach der Gattung des Hauptanspruchs. Es ist schon ein solches Flüssigkeitsfilter zum Reinigen von Kraftstoffen aus der DE-C 25 47 904 bekannt, bei dem in einem zweiteiligen Gehäuse aus einem becherförmigen Gehäuseteil und einem zugehörigen Deckelteil ein axial durchströmter Wickelfiltereinsatz angeordnet ist und beide Teile des Gehäuses an ihren Rändern miteinander verbördelt sind. Diese Filterbauart weist eine erste Dichtstelle zwischen der Innenwand des Gehäuses und der Mantelfläche des Wickelfiltereinsatzes auf, welche eine Schmutzseite von einer Reinseite trennt, während die Abdichtung von dem Inneren des Gehäuses nach außen eine zweite Dichtstelle in den verbördelten Ränder übernimmt. Von Nachteil bei dieser Bauart ist, daß sie zwei voneinander getrennte Dichtstellen aufweist, die zudem aus einem kraftstoffbeständigen Kleber bestehen müssen. Dies führt zu einer relativ aufwendigen Bauweise, die insbesondere durch die Handhabung des Klebers in der Fertigung bedingt ist. Fernerhin besteht die Gefahr von Dichtheitsproblemen, wenn bei extremen Bedingungen Haar-Risse in der Verklebung zwischen Wickelfiltereinsatz und Metallgehäuse auftreten.

Ferner ist aus der DE-B 20 36 231 ein Flüssigkeitsfilter bekannt, dessen aus becherförmigen Gehäuseteil und Deckelteil bestehendes Gehäuse in seinem Innern einen Filtereinsatz in Sternfilterbauart aufnimmt. Hier sind bereits klebstofffreie Abdichtungen unter Verwendung von O-Ringen vorgesehen, um das Innere des Gehäuses nach außen bzw. eine Schmutzseite von einer Reinseite zu trennen. Von Nachteil bei dieser Bauart ist, daß für diese Dichtfunktionen zwei voneinander räumlich getrennte Dichtstellen erforderlich sind. Ferner ist diese Art der O-Ring-Abdichtung nicht auf einen Filter mit einem Wickelfiltereinsatz übertragbar.

Vorteile der Erfindung

Das erfindungsgemäße Flüssigkeitsfilter mit den kennzeichnenden Merkmalen des Hauptanspruchs hat demgegenüber den Vorteil, daß es in einfacher und billiger Weise eine möglichst klebstofffreie Abdichtung ermöglicht. Dabei werden von einem einzigen Dichtring, der sowohl in radialer als auch in axialer Richtung abdichtet, zwei Dichtfunktionen übernommen, um einmal das Gehäuseinnere nach außen und zum anderen eine Schmutzseite von einer Reinseite zu trennen. Die klebstofffreie Abdichtung führt zu einer kostengünstigeren Lösung und zu einem umweltfreundlicheren Fertigungsverfahren, da eine Klebung zwischen dem Wickelfiltereinsatz und der metallischen Gehäusewand entfällt. Damit kann auch ein für die Verklebung notwendiger Arbeitsgang Entfetten entfallen. Vermieden wird dabei auch die Gefahr, daß in der Klebestelle zwischen Wickel und Gehäuse Haarrisse auftreten, so daß das Filter den chemischen und physikalischen Anforderungen im Betrieb besser standhält. Der zudem am Wickelfiltereinsatz angeformte, ringförmige Bund führt zu einer größeren Formstabilität und erleichtert dadurch die Handhabung des Wickelfiltereinsatzes.

Durch die in den Unteransprüchen aufgeführten Maßnahmen sind vorteilhafte Weiterbildungen und Verbesserungen des im Hauptanspruch angegebenen Flüssigkeitsfilters möglich. Durch eine Ausbildung nach Anspruch 2 wird die einfache und stabile Bauweise des Flüssigkeitsfilters unterstützt. Vorteilhaft ist ferner eine Bauweise nach Anspruch 3, die zu einer besonders kostengünstigen Lösung führt. Besonders vorteilhaft sind ferner Ausbildungen des Flüssigkeitsfilter nach den Ansprüchen 4 und 7, welche den Einbau von O-Ringen für die verschiedenen Dichtfunktionen erlauben. Weiterhin ist es zweckmäßig, wenn bei einem Flüssigkeitsfilter nach Anspruch 9 die Dichtfunktionen von einer im Querschnitt U-förmigen Manschette übernommen werden. Weitere vorteilhafte Ausgestaltungen ergeben sich aus den übrigen Ansprüchen, der Zeichnung sowie der Beschreibung.

Zeichnung

Drei Ausführungsbeispiele der Erfindung sind in der Zeichnung dargestellt und in der nachfolgenden Beschreibung näher erläutert. Es zeigen Figur 1 einen teilweisen Längsschnitt durch eine erstes Ausführungsbeispiel des Flüssigkeitsfilters und die Figuren 2 und 3 jeweils Längsschnitte durch einen Teil eines zweiten bzw. dritten Ausführungsbeispieles des Flüssigkeitsfilters.

Beschreibung der Ausführungsbeispiele

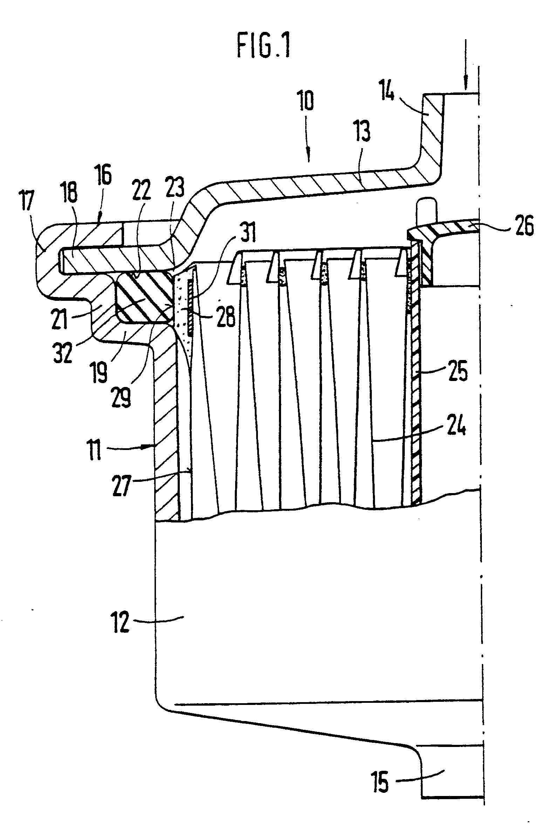

Die Figur 1 zeigt ein Flüssigkeitsfilter 10 in Leitungsfilterbauart, mit einem im wesentlichen zweiteiligen Gehäuse 11, das aus einem becherförmigen Gehäuseteil 12 und einem zugehörigen Deckelteil 13 besteht. Am Deckelteil 13 ist ein Anschlußstutzen 14 für den Zulauf sowie am Gehäuseteil 12 ein Anschlußstutzen 15 für den Ablauf angeordnet. Gehäuseteil 12 und Deckelteil 13 sind durch eine Bördelstelle 16 an ihren Rändern fest miteinander verbunden.

Das becherförmige Gehäuseteil 12 weist in der Nähe der Bördelstelle 16 eine in Bezug zur Längsachse des Flüssigkeitsfilters 10 radial nach außen verlaufende Schulter 19 auf, an die sich ein koaxial zur Längsachse verlaufender, aufgeweiteter Wandabschnitt 21 anschließt, der dann seinerseits in den umgebördelten Rand 17 des Gehäuseteils 12 übergeht. Der auskragende Rand 18 des Deckelteils 13 bildet im Durchmesserbereich der Schulter 19 einen ebenen, radial verlaufenden Wandbereich 22, der zusammen mit dem Wandabschnitt 21 und der Schulter 19 einen zum Innern des Gehäuses 11 hin offenen Ringraum 23 begrenzt.

Das Gehäuse 11 nimmt in seinem Inneren einen an sich bekannten Wikkelfiltereinsatz 24 auf, der axial durchströmt wird. Bei diesem Wikkelfiltereinsatz 24 wird ein im Querschnitt V-förmiger Filterpapierstreifen unter Zufügung eines Dichtstreifens so spiralig um ein Mittelrohr 25 aufgewickelt, daß er zwei zu entgegengesetzten Stirnseiten hin offene, spiralförmige Räume bildet. Der Wickelfiltereinsatz 24 stützt sich einerseits auf nicht näher gezeichnete Rippen im becherförmigen Gehäuseteil 12 und andererseits über eine das Mittelrohr 25 verschließende Kappe 26 am Deckelteil 13 ab. An einer äußeren Mantelfläche 27 des Wickelfiltereinsatzes 24 ist in Höhe des Ringraumes 23 ein formstabiler, ringförmiger Bund 28 angeformt. Dieser Bund 28 besteht aus einem reinem Polyamid und ist am Außenumfang des Wickelfilterelements 24 angespritzt und zudem kreisringförmig so geformt, daß er außen eine glatte, zylindrische Dichtfläche 29 bildet, die im wesentlichen den Ringraum 23 auf seiner zum Gehäuseinneren hin offenen Seite begrenzt. Der ringförmige Bund 28 verleiht dem Wickelfiltereinsatz 24 eine größere Formstabilität, die noch zusätzlich nach Bedarf durch einen in den Bund 28 eingespritzten Metallring 31 verstärkt wird. Die Dichtfläche 29 kann ihre Aufgaben erfüllen, wenn die radiale Dicke des Bundes 28 relativ klein gehalten wird, was wiederum eine kompakte Bauweise und eine gute Ausnutzung des Innenraums erlaubt.

Der auf diese Weise in der Nähe der Bördelstelle 16 gebildete, umlaufende Ringraum 23 hat auf diese Weise einen im wesentlichen quadratischen Querschnitt und nimmt einen die verschiedenen Abdichtfunktionen übernehmenden O-Ring 32 auf. Dieser O-Ring 32 liegt einmal an der Dichtfläche 29 an und trennt damit die dem Anschlußstutzen 14 zugeordnete Schmutzseite von der dem Anschlußstutzen 15 zugeordneten Ringseite. Ferner liegt der O-Ring 32 im Wandbereich 22 am Deckelteil 13 und zumindest im Wandabschnitt 21 am Gehäuseteil 12 an, so daß auch das Innere des Gehäuses 11 nach außen hin abgedichtet wird und über die Bördelstelle 16 keine Flüssigkeit entweichen kann. Der hier als Weichgummi-Dichtring ausgeführte O-Ring 32 dichtet somit in radialer und in axialer Richtung ab, so daß mit einem einzigen Dichtring 32 zwei Abdichtfunktionen im Flüssigkeitsfilter 10 erreicht werden. Beim Einbau des Wickelfiltereinsatzes 24 im Gehäuse 11 werden somit keine umweltbelastenden Verklebungen notwendig; zudem können bei dieser kostengünstigen Lösung keine Haarrisse in der Dichtstelle zwischen Gehäuseteil 12 und Wickelfiltereinsatz 24 auftreten.

Die Wirkungsweise des Flüssigkeitsfilters 10, bei dem der zu reinigende Kraftstoff am Anschlußstutzen 14 zugeführt wird, axial das Wickelfilterelement 24 durchströmt und gereinigt am Anschlußstutzen 15 austritt, ist an sich bekannt, so daß hierauf nicht näher eingegangen werden muß. Das Flüssigkeitsfilter 10 wird besonders zum Reinigen von Kraftstoffen, wie Benzin oder Dieselöl, verwendet.

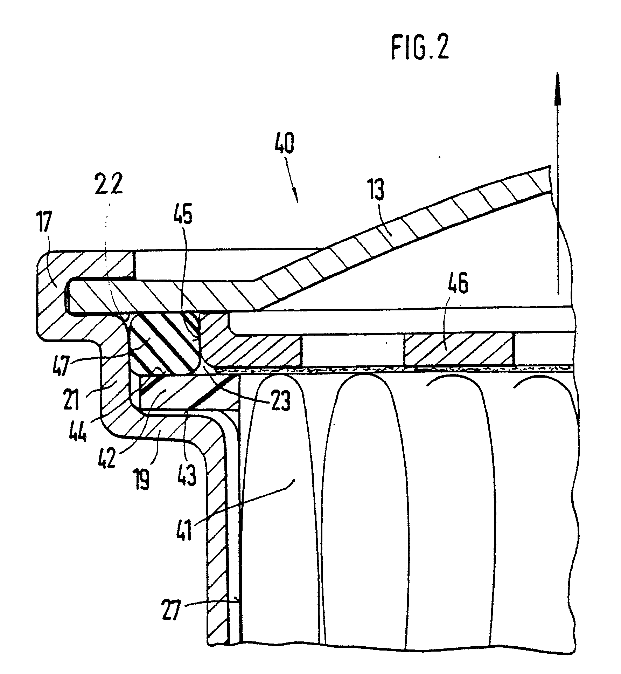

Die Figur 2 zeigt eine Längsschnitt durch einen Teil eines zweiten Flüssigkeitsfilters 40, das sich von ersten Flüssigkeitsfilter 10 nach Figur 1 wie folgt unterscheidet, wobei für gleiche Bauelemente gleiche Bezugszeichen verwendet werden.

Das zweite Flüssigkeitsfilter 40 weist einen im Prinzip gleich aufgebauten Wickelfiltereinsatz 41 auf, an dem nahe einem stirnseitigen Ende ein formstabiler, ringförmiger Bund 42 an der Mantelfläche 27 angeformt ist, dessen in radialer Richtung sich erstreckende Breite nunmehr größer gewählt ist. Dieser Bund 42 liegt nun mit seiner einen Seite 43 auf der Schulter 19 des Gehäuseteils 12 auf und bildet mit seiner gegenüberliegenden Seite eine radial verlaufende, ebene Dichtfläche 44, welche an den Ringraum 23 grenzt. Während an den Ringraum 23 wie bisher der axial verlaufende Wandabschnitt 21 und der radial verlaufende Wandbereich 22 grenzen, wird er auf seiner vierten Seite von einer Umfangsfläche 45 einer gelochten Stirnplatte 46 begrenzt, die im Innern des Gehäuses 11 zwischen dem Deckelteil 13 und der Stirnseite des Wickelfiltereinsatzes 41 angeordnet ist. Der auf diese Weise begrenzte Ringraum 23 hat wiederum einen quadratischen Querschnitt und nimmt als Dichtring einen O-Ring 47 auf.

Der am Wickelfiltereinsatz 41 angeformte Bund 42 hat eine in radialer Richtung sich erstreckende Breite, die größer ist als der Durchmesser des O-Ringes 47. Zudem ist sein Außendurchmesser kleiner gewählt als der Innendurchmesser des Wandabschnittes 21, so daß der Wickelfiltereinsatz 41 ohne weiteres in das becherförmige Gehäuseteil 12 einsetzbar ist. Der Bund 42 kann wie in Figur 1 aus Kunststoff bestehen und am Wickelfiltereinsatz 41 angespritzt werden, wodurch letzterer (41) eine größere Formstabilität erreicht.

Die Wirkungsweise des zweiten Flüssigkeitsfilters 40 entspricht derjenigen des ersten Filters 10. Der hierbei in radialer und in axialer Richtung abdichtende O-Ring 47 übernimmt wiederum zwei Abdichtfunktionen, indem er durch seine Anlage an der Dichtfläche 44 des Bundes 42 Schmutz- und Reinseite im Filter 40 voneinander trennt und zugleich durch seine Anlage an dem Wandabschnitt 21 un dem radial verlaufenden Wandbereich 22 das Innere des Gehäuses 11 nach außen hin abdichtet.

Der Zusammenbau der einzelnen Teile des zweiten Flüssigkeitsfilters 40 gestaltet sich relativ einfach. In das noch offene Gehäuseteil 12 wird der Wickelfiltereinsatz 41 eingeführt, wobei er durch seinen Bund 42 im wesentlichen im Gehäuseteil 12 zentriert ist. Anschließend läßt sich auf die Dichtfläche 44 der O-Ring 47 auflegen, wobei er in seiner Lage durch die eingelegte Stirnplatte 46 zusätzlich gehalten wird. Nach dem Einlegen des Deckelteils 13 wird der Rand 17 umgebördelt, wobei die Maßhaltigkeit des Ringraumes 23 soweit beibehalten wird, daß der O-Ring 47 seine Dichtfunktionen einwandfrei erfüllen kann.

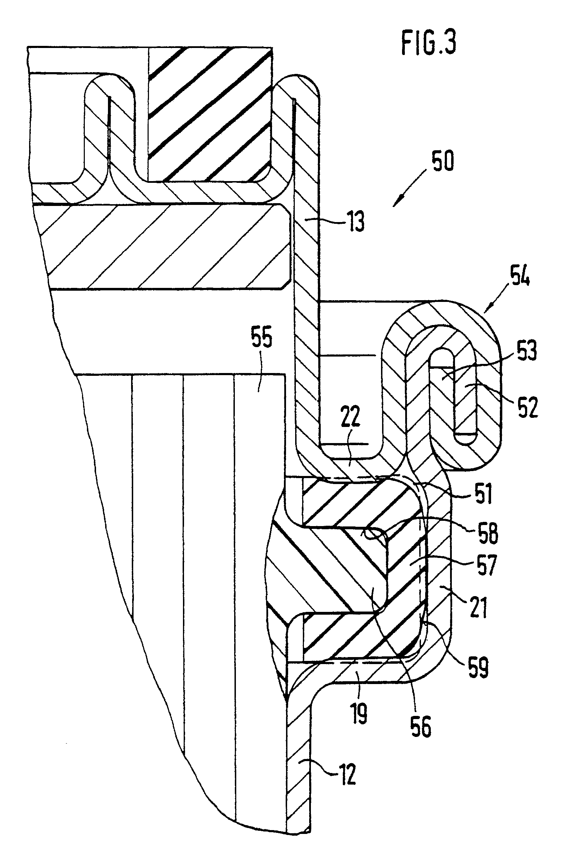

Die Figur 3 zeigt einen Längsschnitt durch einen Teil eines dritten Flüssigkeitsfilters 50, der sich vom ersten Flüssigkeitsfilter 10 nach Figur 1 wie folgt unterscheidet, wobei gleiche Bauelemente mit gleichen Bezugszeichen versehen sind.

Beim dritten Flüssigkeitsfilter 50 ist ein Ringraum 51 wie bisher durch eine Schulter 19 und einen Wandabschnitt 21 des becherförmigen Gehäuses 12 sowie durch einen radial sich erstreckenden Bereich 22 des Deckelteils 13 gebildet. Die Ränder 52, 53 beider Bauteile 12, 13 sind nunmehr durch eine Doppelbördelung 54 miteinander verbunden, die sich - in Längsachse des Flüssigkeitsfilters 50 gesehen - neben dem Ringraum 51 zum Deckelteil 13 hin erstreckt.

Der in den Filter 50 eingebaute Wickelfiltereinsatz 55 weist nun einen außen angeformten, formstabilen, ringförmigen Bund 56 auf, der zentrisch so in den Ringraum 51 ragt, daß ein freier, U-förmiger Querschnitt verbleibt. Dieser Querschnitt wird nun von einer Gummimanschette 57 ausgefüllt, die in entsprechender Weise U-förmig ausgebildet ist. Die aus Weichgummi bestehende Gummimanschette 57 umschließt mit ihrer Innenfläche 58 den Bund 56, der im wesentlichen einen rechteckförmigen Querschnitt aufweist und bildet dabei eine sichere Abdichtung zwischen der Schmutz- und der Reinseite im Filter 50. Mit ihrer Außenfläche 59 liegt die Gummimanschette 57 an den beiden Gehäuseteilen 12, 13 an und übernimmt zugleich die Abdichtung des Gehäuseinneren nach außen hin.

Beim dritten Flüssigkeitsfilter 50 wird somit eine klebstofffreie Abdichtung des Wickelfiltereinsatzes 55 im Gehäuse 11 erreicht, wobei ein einziges Dichtelement 57 zwei Abdichtfunktionen übernimmt.

Die gezeigte Abdichtung eines Wickelfiltereinsatzes mit einem Weichgummidichtring ist nicht auf die in Figur 1 gezeigte Leitungsfilterbauart beschränkt, wo Zulauf und Ablauf in entgegengesetzt liegenden Gehäusestirnseiten angeordnet sind, sondern kann genauso gut auch bei einer Boxbauweise angewandt werden, wo Zulauf und Ablauf im gleichen Deckelteil angeordnet sind. Auch bei dem dritten Flüssigkeitsfilter 50 kann die Form des freien Querschnitts im Ringraum 51 und damit die Form der Gummimanschette sich einer V-Form annähern.

**Ansprüche**

1. Flüssigkeitsfilter, insbesondere für Kraftstoffe, mit einem im wesentlichen zweiteiligen Gehäuse, das ein becherförmiges Gehäuseteil und ein Deckelteil aufweist, die an ihren Rändern unter Verwendung eines Dichtmittels in einer das Innere des Gehäuses nach außen hin abdichtenden Weise fest miteinander verbunden sind und bei dem das Gehäuse einen Wickelfiltereinsatz aufnimmt, der mit Hilfe eines Dichtmittels in einer eine Schmutz- und eine Reinseite voneinander trennenden Weise im Innern des Gehäuses angeordnet ist, dadurch gekennzeichnet, daß an dem Wickelfiltereinsatz (24; 41; 55) ein formstabiler, ringförmiger Bund (28, 42, 56) angeformt ist, der zusammen mit wenigstens einem Wandabschnitt (21) des Gehäuseteils (12) und einem Wandbereich (22) des Deckelteils (13) einen Ringraum (23, 51) begrenzt, der einen die Funktionen beider Dichtmittel ausübenden Dichtring (32, 47, 57) aufnimmt.

2. Flüssigkeitsfilter nach Anspruch 1, dadurch gekennzeichnet, daß die metallischen Ränder (17, 18; 52, 53) von Gehäuseteil (12) und Deckelteil (13) miteinander verbördelt sind.

3. Flüssigkeitsfilter nach Anspruch 1 oder 2, dadurch gekennzeichnet, daß der Ringraum (23, 51) im wesentlichen einen quadratischen Querschnitt aufweist und der Dichtring ein O-Ring (32, 47) ist.

4. Flüssigkeitsfilter nach einem oder mehreren der Ansprüche 1 bis 3, dadurch gekennzeichnet, daß im becherförmigen Gehäuseteil (12) eine Schulter (19) mit einem angrenzenden, aufgeweiteten Wandabschnitt (21) zusammen mit einem senkrecht zur Filterlängsachse verlaufenden Wandbereich (22) einen zum Innern des Gehäuses (11) hin offenen Ringraum (23) bildet, der von einer formstabilen, zylindrischen Dichtfläche (29) des am Wickelfiltereinsatzes (14) angeformten Bundes (28) begrenzt wird.

5. Flüssigkeitsfilter nach Anspruch 4, dadurch gekennzeichnet, daß der angeformte Bund (28) aus Kunststoff besteht und in seinem Materialquerschnitt ein formstabilisierender Metallring (31) angeordnet ist.

6. Flüssigkeitsfilter nach Anspruch 4 oder 5, dadurch gekennzeichnet, daß die radiale Dicke des Bundes (28) gleich oder kleiner ist als der Durchmesser des O-Ringes.

7. Flüssigkeitsfilter nach einem oder mehreren der Ansprüche 1 bis 3, dadurch gekennzeichnet, daß der am Wickelfiltereinsatz (41) angeformte, sich radial nach außen erstreckende Bund (42) mit einer Seite (43) an der Schulter (19) im Gehäuseteil (12) anliegt und mit seiner gegenüberliegenden Dichtseite (44) den Ring-graum (23) begrenzt, dessen andere Seiten von dem aufgeweiteten, zur Längsachse koaxial verlaufenden Wandabschnitt (21) des Gehäuseteils (12), vom radial verlaufenden Wandbereich (22) des Deckelteils (13) und von einer Umfangsfläche (45) einer Stirnplatte (46) gebildet werden, die zwischen Wickelfiltereinsatz (41) und Deckelteil (13) im Innern des Gehäuses (11) angeordnet ist.

8. Flüssigkeitsfilter nach Anspruch 7, dadurch gekennzeichnet, daß die radial sich erstreckende Breite des Bundes (42) gleich oder größer ist als der Durchmesser des O-Ringes (47).

9. Flüssigkeitsfilter nach Anspruch 1 oder 2, dadurch gekennzeichnet, daß der am Wickelfilterelement (55) angeformte Bund (56) radial in den von Gehäuseteil (12) und Deckelteil (13) begrenzten Ringraum (51) hineinragt und ihm einen U-förmigen Querschnitt verleiht und daß der Ringraum (51) als Dichtring eine im Querschnitt U-förmige Manschette (57) aufnimmt, die den Bund (56) umspannt.

10. Flüssigkeitsfilter nach Anspruch 9, dadurch gekennzeichnet, daß die Ränder (52, 53) von Gehäuseteil (12) und Deckelteil (13) durch eine Doppelbördelung (54) miteinander verbunden sind, die sich, in Längsrichtung des Gehäuses (11) gesehen, neben dem Bereich des Ringraumes (51) zum Deckelteil (13) hin anschließt.

11. Flüssigkeitsfilter nach einem der Ansprüche 1 bis 10, dadurch gekennzeichnet, daß der Dichtring (32, 47, 57) aus Weichgummi besteht.

## Claims

1. Liquid filter, in particular for fuels, with an essentially two-part housing which has a cup-shaped housing part and a cover part which, with the use of a sealing means, are connected firmly to one another at their edges in a manner which seals off the interior of the housing from the outside and in which the housing accommodates a coil-type filter element which, with the aid of a sealing means, is arranged in the interior of the housing in a manner which separates a dirt side and a clean side from one another, characterised in that moulded onto the coil-type filter element (24; 41; 55) is a dimensionally stable annular collar (28, 42, 56) which, together with at least one wall portion (21) of the housing part (12) and one wall region (22) of the cover part (13), delimits an annular space (23, 51) which accommodates a sealing ring (32, 47, 57) exercising the functions of both sealing means.

2. Liquid filter according to Claim 1, characterised in that the metallic edges (17, 18; 52, 53) of housing part (12) and cover part (13) are flanged together.

3. Liquid filter according to Claim 1 or 2, characterised in that the annular space (23, 51) has an essentially square cross-section and the sealing ring is an O-ring (32, 47).

4. Liquid filter according to one or more of Claims 1 to 3, characterised in that, in the cup-shaped housing part (12), a shoulder (19) with an adjoining, widened wall portion (21) forms, together with a wall region (22) extending perpendicular to the longitudinal axis of the filter, an annular space (23) which is open towards the interior of the housing (11) and is delimited by a dimensionally stable, cylindrical sealing surface (29) of the collar (28) moulded onto the coil-type filter element (14).

5. Liquid filter according to Claim 4, characterised in that the moulded-on collar (28) consists of plastic and a dimension-stabilising metal ring (31) is arranged in the cross-section of its material.

6. Liquid filter according to Claim 4 or 5, characterised in that the radial thickness of the collar (28) is equal to or less than the diameter of the O-ring.

7. Liquid filter according to one or more of Claims 1 to 3, characterised in that the radially outward-extending collar (42) moulded onto the coil-type filter element (41) rests by one side (43) against the shoulder (19) in the housing part (12) and, with its opposite sealing side (44) delimits the annular space (23), the other sides of which are formed by the widened wall portion (21) of the housing part (12), said wall portion extending coaxially to the longitudinal axis, by the radially extending wall region (22) of the cover part (13) and by a peripheral surface (45) of an end plate (46) which is arranged in the interior of the housing (11), between the coil-type filter element (41) and the cover part (13).

8. Liquid filter according to Claim 7, characterised in that the radially extending width of the collar (42) is equal to or greater than the diameter of the O-ring (47).

9. Liquid filter according to Claim 1 or 2, characterised in that the collar (56) moulded onto the coil-type filter element (55) projects radially into the annular space (51) delimited by housing part (12) and cover part (13) and imparts to it a U-shaped cross-section, and in that, as sealing ring, the annular space (51) accommodates a packing ring (57) of U-shaped cross-section which grips the collar (56).

10. Liquid filter according to Claim 9, characterised in that the edges (52, 53) of housing part (12) and cover part (13) are connected to one another by a double flange arrangement (54) which adjoins the region of the annular space (51) towards the cover part (13), as seen in the longitudinal direction of the housing (11).

11. Liquid filter according to one of Claims 1 to 10, characterised in that the sealing ring (32, 47, 57) consists of soft rubber.

**Revendications**

1. Filtre pour liquides, notamment pour carburants, comprenant un carter essentiellement en deux parties, qui présente une partie de carter en forme de coupe et une partie de couvercle, qui sont reliées de manière fixe par leurs bords, en utilisant un moyen d'étanchéité, de manière à étancher l'intérieur du carter à l'égard de l'extérieur et dont le carter reçoit une cartouche filtrante à enroulements, qui est disposée à l'intérieur du carter à l'aide d'un moyen d'étanchéité en séparant un côté pollué d'un côté épuré, caractérisé en ce qu'il est aménagé sur la cartouche filtrante (24 ; 41 ; 55) un collet (28, 42, 56) circulaire de forme fixe, qui délimite avec au moins un segment de paroi (21) de la partie de carter (12) et une région de paroi (22) de la partie de couvercle (13) une chambre annulaire (23, 51) qui reçoit une bague d'étanchéité (32, 47, 57) exerçant les fonctions des deux moyens d'étanchéité.

2. Filtre pour liquides selon la revendication 1, caractérisé en ce que les bords en métal (17, 18, 52, 53) de la partie de carter (12) et de la partie de couvercle (13) sont rabattus ensemble.

3. Filtre pour liquides selon la revendication 1 ou 2, caractérisé en ce que la chambre annulaire (23, 51) présente une section essentiellement carrée et en ce que la bague d'étanchéité est un joint torique (32, 47).

4. Filtre pour liquides selon l'une ou plusieurs des revendications 1 à 3, caractérisé en ce que, dans la partie de carter (12) en forme de coupe, un épaulement (19) constitue avec un segment de paroi (21) étagé limitrophe, ainsi qu'avec une région de paroi (22) s'étendant perpendiculairement à l'axe longitudinal du filtre, une chambre annulaire (23) ouverte s'étendant vers l'intérieur du carter (11), qui est délimitée par une surface d'étanchéité (29) cylindrique, de forme fixe du rebord (28) aménagé sur la cartouche filtrante à enroulements.

5. Filtre pour liquides selon la revendication 4, caractérisé en ce que le rebord (28) est en matière plastique et en ce qu'un anneau de métal (31) de stabilisation de forme est disposé dans la section de sa matière.

6. Filtre pour liquides selon la revendication 4 ou 5, caractérisé en ce que l'épaisseur radiale du rebord (28) est égale ou inférieure au diamètre du joint torique.

7. Filtre pour liquides selon l'une ou plusieurs des revendications 1 à 3, caractérisé en ce que le collet (42) aménagé sur la cartouche filtrante à enroulements et s'étendant radialement vers l'extérieur s'appuie par un côté (43) sur l'épaulement (19) de la partie de carter et délimite par sa face d'étanchéité (44) en regard de la chambre annulaire (23) dont les autres côtés sont constitués par le segment de paroi élargie (21) de la partie de carter (12), qui s'étend coaxialement à l'axe longitudinal, par la région de paroi (22) de la partie de couvercle (13) s'étendant radialement et par une surface de pourtour (45) d'une plaque frontale (46) qui est disposée à l'intérieur du carter (11) entre la cartouche filtrante (41) et la partie de couvercle (13).

8. Filtre pour liquides selon la revendication 7, caractérisé en ce que la largeur du collet (42) s'étendant radialement est égale ou supérieure au diamètre du joint torique (47).

9. Filtre pour liquides selon la revendication 1 ou 2, caractérisé en ce que le rebord (56) aménagé sur l'élément filtrant à enroulements (55) pénètre radialement dans la chambre annulaire (51) délimitée par la partie de carter (12) et la partie de couvercle (13) et lui confère une section en forme d'U et en ce que la chambre annulaire (51) reçoit comme joint d'étanchéité une garniture à section en forme d'U, qui entoure le rebord (56).

10. Filtre pour liquides selon la revendication 9, caractérisé en ce que les bords (52, 53) de la partie de carter (12) et de la partie de couvercle (13) sont reliées ensemble par un double rabattement (54) qui, ne suivant l'axe longitudinal du carter (11) se raccorde à la partie de couvercle (13) à côté de la région de la chambre annulaire (51).

11. Filtre pour liquides selon l'une des revendications 1 à 10, caractérisé en ce que la bague d'étanchéité (32, 47, 57) est en caoutchouc tendre.

# FIG.1

FIG.2

FIG.3